# EUROPEAN PATENT APPLICATION

(11) **EP 4 624 480 A1**
(43) Date of publication of application: **01.10.2025**
(21) Application number: 23894527.3
(22) Date of filing: 17.11.2023
(51) Int. Cl.: C07F 7/18, C08G 77/38

(54) **POLYORGANOSILOXANE**

(30) Priority: 22.11.2022 JP 2022186797
(71) Applicant: SEKISUI CHEMICAL CO., LTD., Osaka-shi Osaka 530-8565 (JP)
(72) Inventor: KADOWAKI, Kazuki, Mishima-gun, Osaka 618-0021 (JP); ISHIDA, Hiroya, Mishima-gun, Osaka 618-0021 (JP)
(74) Representative: Ter Meer Steinmeister & Partner
(86) International application number: PCT/JP2023/041449
(87) International publication number: WO 2024/111519

(57) **Abstract**

A polyorganosiloxane of the present invention includes a structure represented by the following formula (1): 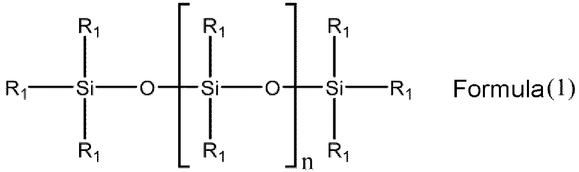 wherein R₁ are each independently a group represented by A-B or a monovalent hydrocarbon group having 1 to 4 carbon atoms; at least one R₁ among a plurality of R₁ is a group represented by A-B, wherein the A is a divalent organic group bonded to a silicon atom, and the B includes conjugated 3 or more and 6 or less aromatic 6-membered rings; when, among atoms constituting the A, an atom bonded to the aromatic ring included in the B is an α-position atom, an atom bonded to the α-position atom is a β-position atom, and an atom bonded to the β-position atom and other than the α-position atom is a γ-position atom, and any one of the α-position atom, the β-position atom, and the γ-position atom is a heteroatom; and n is an integer of 1 or more. According to the present invention, it is possible to provide a polyorganosiloxane with high fluidity while improving dispersibility by increasing adsorptivity for a filler.

## Description

### Technical Field

The present invention relates to a polyorganosiloxane which is suitable for use as a dispersant for a filler.

### Background Art

In recent years, an amount of heat generated in an electronic device has increased due to high integration of circuits, and countermeasures against the heat have become important, leading to an increase in demand for heat dissipation materials. For example, heat dissipation materials using fillers such as graphite are known for their high heat dissipation.

In general, many fillers have poor dispersibility in solvents, and particularly graphite, which is a compound with a π-conjugated system, has poor dispersibility, and improvements are required from a viewpoint of improving heat dissipation.

As dispersants that improve the dispersibility of fillers, known are those composed of a part that interacts with a filler (filler linker) and a polymer main chain.

PTL1 discloses a polyorganosiloxane terminated with a polycyclic aromatic group having an aromatic condensed ring group as a treatment agent for improving the dispersibility of nanocarbons. In examples, the use of polyorganosiloxane having a pyrene group as the aromatic condensed ring group is specifically shown. Since the polyorganosiloxane has the aromatic condensed ring group, it is said that the dispersibility can be improved by utilizing a π-π interaction with nanocarbons.

PTL2 discloses a specific polyorganosiloxane with a monovalent hydrocarbon group having 10 or more carbon atoms, which includes a plurality of aromatic rings, and states that the polyorganosiloxane is useful as a surface treatment agent for various functional fillers and can be blended in large quantities into a resin composition without impairing handling workability or dispersion stability of the various functional fillers.

### Citation List

### Patent Literature

PTL1: JP 2018-197300 A
PTL2: JP 2016-534161 A

### Summary of Invention

### Technical Problem

However, the polyorganosiloxane described in PTL1 has low fluidity in a solvent and, when used as a treatment agent, there may be cases where it requires heating or ultrasonic treatment, which reduces working efficiency.

PTL2 describes the polyorganosiloxane including a plurality of aromatic rings, but there is a case where this has a low affinity for a filler and the filler cannot be sufficiently dispersed in a solvent.

Therefore, an object of the present invention is to provide a polyorganosiloxane with high fluidity while improving dispersibility by increasing adsorptivity for the filler.

### Solution to Problem

The present inventors have conducted intensive research to achieve the object, and as a result, have found that the problem described above can be solved by a polyorganosiloxane including conjugated 3 or more and 6 or less aromatic 6-membered rings and a heteroatom at a specific position, and have completed the present invention.

Thus, the present invention relates to the following [1] to [8].
[1] A polyorganosiloxane comprising a structure represented by the following formula (1): 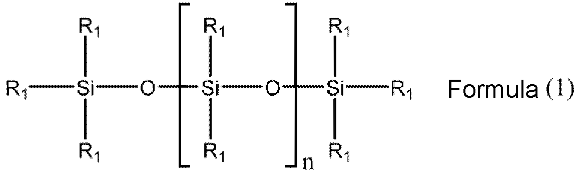 wherein
   R₁ are each independently a group represented by A-B or a monovalent hydrocarbon group having 1 to 4 carbon atoms;
   at least one R₁ among a plurality of R₁ is a group represented by A-B, wherein the A is a divalent organic group bonded to a silicon atom, and the B comprises conjugated 3 or more and 6 or less aromatic 6-membered rings;
   when, among atoms constituting the A, an atom bonded to the aromatic 6-membered ring included in the B is an α-position atom, an atom bonded to the α-position atom is a β-position atom, and an atom bonded to the β-position atom and other than the α-position atom is a γ-position atom, and any one of the α-position atom, the β-position atom, and the γ-position atom is a heteroatom; and
   n is an integer of 1 or more.
[2] The polyorganosiloxane according to the above [1], wherein the polyorganosiloxane comprises a structure represented by the following formula (2): 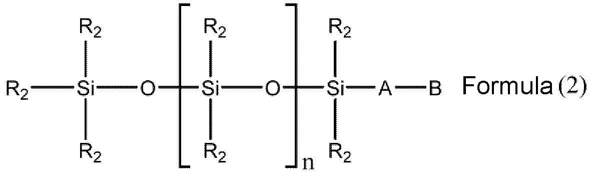 wherein R₂ are monovalent hydrocarbon groups having 1 to 4 carbon atoms, and A, B, and n are the same as defined in the formula (1).
[3] The polyorganosiloxane according to the above [1], wherein the polyorganosiloxane comprises a structure represented by the following formula (3): 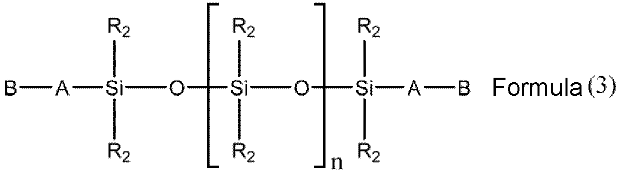 wherein R₂ are monovalent hydrocarbon groups having 1 to 4 carbon atoms, and A, B, and n are the same as defined in the formula (1).
[4] The polyorganosiloxane according to the above [1], wherein the polyorganosiloxane comprises a structure represented by the following formula (4): 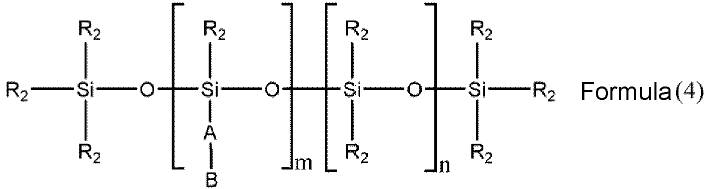 wherein R₂ are monovalent hydrocarbon groups having 1 to 4 carbon atoms, m is an integer of 1 or more and 10 or less, and A, B, and n are the same as defined in the formula (1).
[5] The polyorganosiloxane according to the above [4], wherein the m is 1 or 2.
[6] The polyorganosiloxane according to any one of the above [1] to [5], wherein the B is a condensed ring compound.
[7] The polyorganosiloxane according to any one of the above [1] to [6], wherein the B comprises a pyrene substitution product or a perylene substitution product.
[8] The polyorganosiloxane according to any one of the above [1] to [7], wherein the A has 10 or less carbon atoms.

Advantageous Effects of Invention

According to the present invention, it is possible to provide a polyorganosiloxane with high fluidity while improving dispersibility by increasing adsorptivity for a filler.

### Description of Embodiments

### [Polyorganosiloxane]

A polyorganosiloxane of the present invention includes a structure represented by the following formula (1): 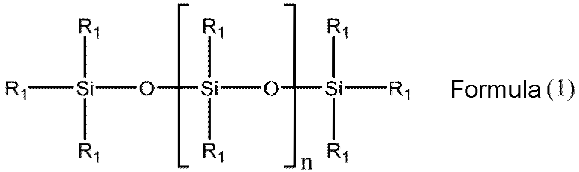 wherein
R₁ are each independently a group represented by A-B or a monovalent hydrocarbon group having 1 to 4 carbon atoms;
at least one R₁ among a plurality of R₁ is a group represented by A-B, wherein the A is a divalent organic group bonded to a silicon atom of the formula (1), and the B includes conjugated 3 or more and 6 or less aromatic 6-membered rings;
when, among atoms constituting the A, an atom bonded to the aromatic 6-membered ring included in the B is an α-position atom, an atom bonded to the α-position atom is a β-position atom, and an atom bonded to the β-position atom and other than the α-position atom is a γ-position atom, and any one of the α-position atom, the β-position atom, and the γ-position atom is a heteroatom; and
n is an integer of 1 or more.

The present inventors studied dispersibility of a polyorganosiloxane used as a dispersant in a solvent. They have found that in the conventional polyorganosiloxanes as described in PTL1, the introduction of an aryl group with a large conjugated system and high crystallinity, such as a pyrene group, increases adsorptivity of the dispersant to a filler, but reduces fluidity of the dispersant, resulting in poor diffusivity in the solvent. Therefore, when used as a treatment agent, heating or ultrasonic treatment may be required, which can easily reduce work efficiency.

On the other hand, to improve the diffusivity of a polyorganosiloxane used as a dispersant in a solvent, it is believed that the fluidity of the dispersant itself should be increased. For example, the introduction of an aryl group with a small conjugated system and low crystallinity, such as a naphthalene skeleton, can increase the fluidity of the dispersant, but in this case, the conjugated system of the aryl group is small, to reduce an interaction with the filler, reducing the adsorptivity of the dispersant to the filler, resulting in not obtaining sufficient dispersibility improving effect of the filler. That is, the current situation is that a dispersant with high fluidity, while improving the dispersibility for the filler, has not been obtained.

The polyorganosiloxane including a plurality of aromatic rings as described in PTL2 have also been known, but in this case, it was found that the adsorptivity of the dispersant to the filler was poor, due to the small conjugated system of the aryl group. Therefore, in some cases, the filler cannot be sufficiently dispersed in the solvent. PTL2 does not describe or suggest any specific structure to obtain a dispersant with high fluidity while having an aryl group with a large conjugated system.

The present invention can provide a polyorganosiloxane with high fluidity while improving the dispersibility by increasing the adsorptivity for a filler. The reason for this is not certain, but it is believed to be as follows.

The polyorganosiloxane of the present invention includes the conjugated 3 or more and 6 or less aromatic 6-membered rings and is provided with a large conjugated system part in its molecular structure. Therefore, the polyorganosiloxane of the present invention has high adsorptivity for a filler, particularly for a filler including a structure with a π-conjugated system, due to a π-π interaction, thereby making it easy to disperse the filler. Furthermore, in the polyorganosiloxane of the present invention, any one of the α-position atom bonded to the aromatic 6-membered ring, the β-position atom, and the γ-position atom is a heteroatom. When there are only C-C bonds near the aromatic ring, the degree of freedom for rotation of the bond is low, and a conformation near the aromatic ring is fixed, increasing crystallinity and resulting in a decrease in fluidity, but the presence of a heteroatom near the aromatic ring increases the degree of freedom for rotation, allowing the vicinity of the aromatic ring to adopt various conformations, and the decrease in crystallinity is thought to increase the fluidity.

### <Polyorganosiloxane Represented by Formula (1)>

R₁ in the formula (1) are each independently a group represented by A-B or a monovalent hydrocarbon group having 1 to 4 carbon atoms.

At least one R₁ among a plurality of R₁ is a group represented by A-B. A is a divalent organic group, and bonded to a silicon atom of the formula (1).

Among atoms constituting A, any one of the α-position atom, the β-position atom, and the γ-position atom is a heteroatom. This allows the fluidity of the polyorganosiloxane to be improved. From the viewpoint of enhancing the fluidity of the polyorganosiloxane, the heteroatom is preferably the α-position atom or the β-position atom, more preferably the α-position atom.

Here, the α-position atom, among the atoms constituting the A, is the atom bonded to the aromatic 6-membered ring included in the B (i.e., one aromatic 6-membered ring in the conjugated 3 or more and 6 or less aromatic 6-membered rings included in the B). The β-position atom is the atom bonded to the α-position atom among the atoms constituting the A. The γ-position atom is the atom bonded to the β-position atom and other than the α-position atom.

In addition, A may also contain a heteroatom in a part other than the α-position atom, the β-position atom, and the γ-position atom.

The heteroatom is not particularly limited, and examples include an oxygen atom, a nitrogen atom, a sulfur atom, and a boron atom, and, among them, preferably the oxygen atom from the viewpoint of effectively enhancing the fluidity of the polyorganosiloxane.

A is preferably a divalent organic group having 11 or less carbon atoms, and more preferably a divalent organic group having 10 or less carbon atoms. Polyorganosiloxanes having a certain number or less carbon atoms in A like this are preferable because they are more likely to enhance the dispersibility of the filler in the solvent. In addition, a lower limit of carbon atoms in A is not particularly limited, but A is preferably a divalent organic group having 4 or more carbon atoms.

Because A contains a heteroatom as described above, it includes a structural unit containing the heteroatom. Examples of the structural unit include ether, ester, an amide, urethane, a thioether and a thioester, and among them, preferably the ether or the ester, more preferably the ether, particularly preferably a cyclic ether, from the viewpoints of enhancing the dispersibility for the filler and enhancing the fluidity. Herein, the cyclic ether is ether including a structure in which carbon of a cyclic hydrocarbon is replaced by oxygen.

In addition, from the viewpoints of enhancing the dispersibility for the filler and enhancing the fluidity, it is preferable that A include a skeleton represented by the following formula (5-1) or formula (5-2).

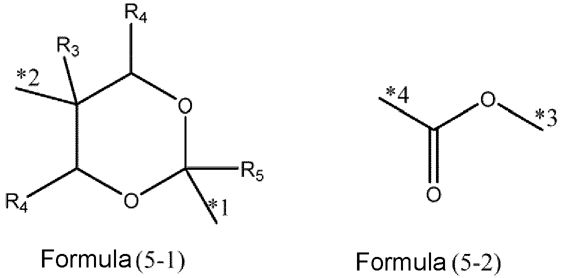

In the formula (5-1), *1 and *2 are bonds, and R₄ are hydrogen atoms or hydrocarbon groups having 1 to 4 carbon atoms, preferably the hydrogen atoms. Two R₄ may be the same or different. R₃ is a hydrogen atom or a hydrocarbon group having 1 to 4 carbon atoms, preferably the hydrocarbon group having 1 to 4 carbon atoms, more preferably the hydrocarbon group having 1 to 3 carbon atoms, even more preferably an ethyl group. R₅ is a hydrogen atom or a hydrocarbon group having 1 to 4 carbon atoms, preferably the hydrogen atom. The oxygen atoms in the formula (5-1) are the β-position atoms or the γ-position atoms described above, preferably the β-position atoms.

In the formula (5-2), *3 and *4 are bonds. An oxygen atom having a bond of *3 is the α-position atom, the β-position atom, or the γ-position atom described above.

Among those described above, it is preferable that A include a skeleton represented by the formula (5-1).

Furthermore, from the viewpoints of enhancing the dispersibility for the filler and enhancing the fluidity, it is preferable that A include any one of structures represented by the following formula (6) to formula (10): 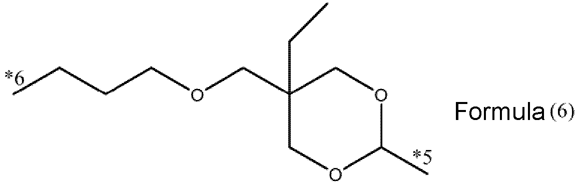 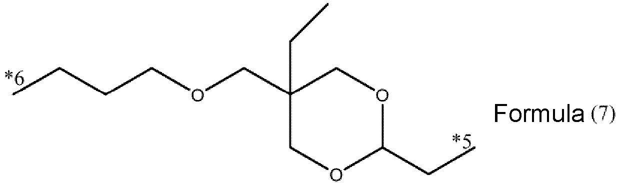 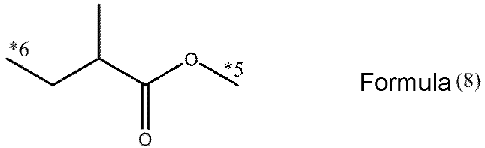 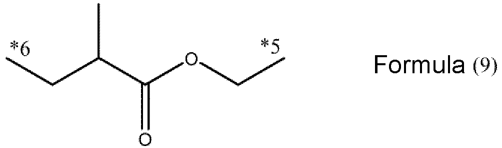 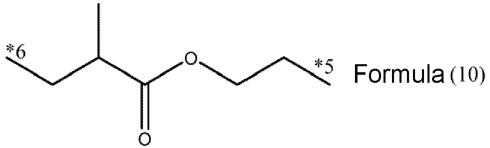 *5 in the formula (6) to formula (10) is a bond bonded to the aromatic 6-membered ring included in B, and *6 is a bond bonded to a silicon atom of the formula (1).

B in the formula (1) includes the conjugated 3 or more and 6 or less aromatic 6-membered rings. Conjugation refers to the occurrence of stabilization by a p-orbital interaction and delocalization of electrons (present in the whole conjugated system) and the like by alternating unsaturated bonds and single bonds in a molecular structure.

When the number of aromatic 6-membered rings is 7 or more, the fluidity of the polyorganosiloxane deteriorates, and when the number of aromatic 6-membered rings is 2 or less, the adsorptivity for the filler is reduced and the dispersibility of the filler deteriorates.

From the viewpoint of enhancing both the adsorptivity for the filler and the fluidity in a balanced manner, it is preferable that the number of aromatic 6-membered rings be 4 or more and 5 or less.

The conjugated 3 or more and 6 or less aromatic 6-membered rings may be a condensed ring compound or a non-condensed ring compound composed of 3 or more and 6 or less aromatic 6-membered rings, but preferably the condensed ring compound. Thus, when B includes a condensed ring compound or B is a condensed ring compound, the adsorptivity to the filler is more enhanced, which is preferable from the viewpoint of improving the dispersibility.

Examples of the condensed ring compound include an anthracene substitution product, a phenanthrene substitution product, a triphenylene substitution product, a pyrene substitution product, a tetracene substitution product, a picene substitution product, a perylene substitution product, a pentaphene substitution product, a pentacene substitution product, and a hexaphene substitution product, and among them preferably the pyrene substitution product or the perylene substitution product. Here, the substitution product means that it may have a substituent group, and for example, an anthracene substitution product means that it includes both anthracene and anthracene having a substituent group, and the same applies to other substitution products.

When the condensed ring compound has a substituent group, at least one or more of the hydrogen atoms constituting the condensed ring compound are replaced by a substituent group. Examples of the substituent group include an organic group having 1 to 10 carbon atoms.

From the viewpoint of enhancing the fluidity of the polyorganosiloxane of the present invention, it is preferable that the condensed ring compound have no substituent group. Thus, it is particularly preferable that B be pyrene or perylene.

In addition, in the above condensed ring compound, any one of the carbon atoms constituting the condensed ring needs only be bonded to the above A.

B in the present invention may utilize, without limitation particularly, those described above, but structures of suitable B are shown below.

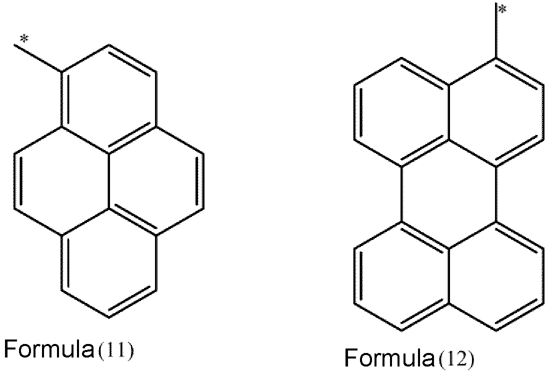

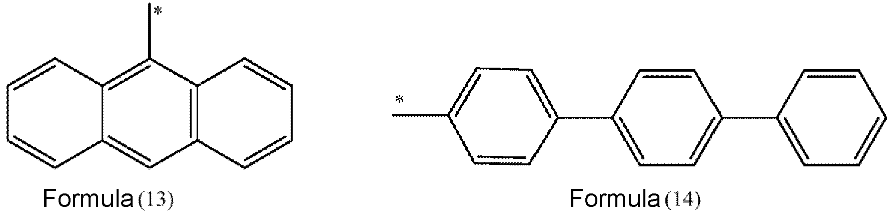

In the above formula (11) to formula (14), * is a bond bonding to A.

Among the above formula (11) to formula (14), B is preferably any one of the compounds of the formula (11) to formula (13) which are condensed ring compounds, among them more preferably pyrene of the formula (11) or perylene of the formula (12), even more preferably the perylene of the formula (12).

In the formula (1), at least one R₁ is a group represented by the above A-B, the remaining R₁ are hydrocarbon groups having 1 to 4 carbon atoms. In the formula (1), among a plurality of R₁, the number of groups represented by A-B is preferably 1 or more and 5 or less, more preferably 1 or 2, and the remainder are preferably monovalent hydrocarbon groups having 1 to 4 carbon atoms. When there is a plurality of groups represented by A-B, the plurality of groups represented by A-B may be the same or different.

Examples of the monovalent hydrocarbon groups having 1 to 4 carbon atoms include a methyl group, an ethyl group, a propyl group, and a butyl group, and among them preferably the methyl group. When there is a plurality of monovalent hydrocarbon groups having 1 to 4 carbon atoms, the plurality of monovalent hydrocarbon groups having 1 to 4 carbon atoms may be the same or different.

In the formula (1), n represents number of repeats, and n is an integer of 1 or more. n is not particularly limited when it is an integer of 1 or more, but from the viewpoint of enhancing fluidity, preferably 500 or less, more preferably 300 or less, even more preferably 250 or less, and preferably 20 or more, more preferably 100 or more, even more preferably 200 or more.

The polyorganosiloxane including a structure represented by the formula (1) may have a group represented by A-B at one end, at both ends, in a side chain, at one end and in a side chain, or at both ends and in a side chain.

### <Polyorganosiloxane Represented by Formula (2)>

The polyorganosiloxane according to one embodiment of the present invention includes a structure represented by the following formula (2). The polyorganosiloxane includes a group represented by A-B at one end. 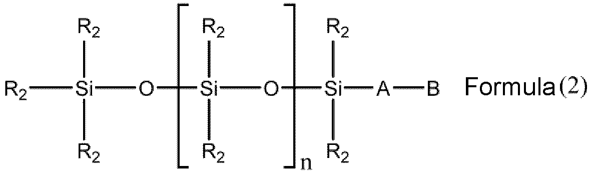 wherein R₂ are monovalent hydrocarbon groups having 1 to 4 carbon atoms, and A, B and n are the same as defined in the formula (1).

In the formula (2), R₂ are monovalent hydrocarbon groups having 1 to 4 carbon atoms, and examples include a methyl group, an ethyl group, a propyl group, and a butyl group, and among them preferably the methyl group. A plurality of R₂ may be the same or different. In the formula (2), A, B, and n are the same as defined in the formula (1), and as described above.

The polyorganosiloxane represented by the formula (2) has a group represented by A-B at one end and is preferable because it is easy to enhance the dispersibility of the filler.

### <Polyorganosiloxane Represented by Formula (3)>

The polyorganosiloxane according to one embodiment of the present invention includes a structure represented by the following formula (3). The polyorganosiloxane has groups represented by A-B at both ends. 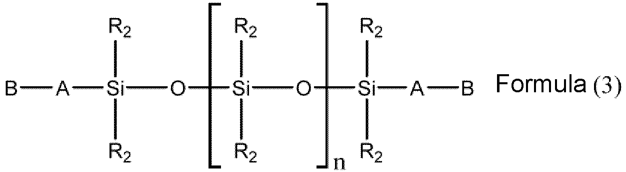 wherein R₂ are monovalent hydrocarbon groups having 1 to 4 carbon atoms, and A, B, and n are the same as defined in the formula (1).

R₂ in the formula (3) are the same as R₂ defined in the formula (2), and A, B, and n are the same as defined in the formula (1).

### <Polyorganosiloxane Represented by Formula (4)>

The polyorganosiloxane according to one embodiment of the present invention includes a structure represented by the following formula (4). The polyorganosiloxane has a group represented by A-B in the side chain. 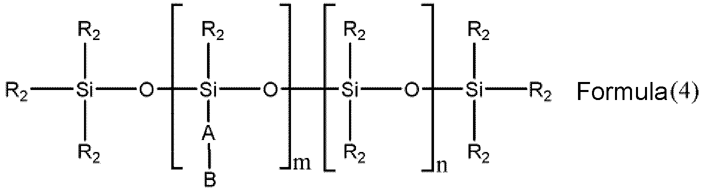 wherein R₂ are monovalent hydrocarbon groups having 1 to 4 carbon atoms, m is an integer of 1 or more and 10 or less, and A, B, and n are the same as defined in the formula (1).

R₂ in the formula (4) are the same as R₂ defined in the formula (2), and A, B, and n are the same as defined in the formula (1).

In the formula (4), m is an integer of 1 or more and 10 or less, preferably an integer of 1 or more and 5 or less, more preferably 1 or 2. When m is in such a range, it is preferable because it increases the fluidity while enhancing the adsorptivity for the filler.

Herein, the polyorganosiloxane represented by the formula (4) may be either a random polymer or a block polymer. More specifically, a unit indicated in the bracket of m and a unit indicated in the bracket of n may exist in the molecule either in a block-like manner or in a random manner.

The above polyorganosiloxane preferably includes a structure represented by the above formula (2) or the above formula (3), more preferably a structure represented by the above formula (2). Since the above polyorganosiloxane includes a structure represented by the above formula (2) or the above formula (3), the main chain of the above polyorganosiloxane is not constrained by the filler, thereby increasing conformational freedom, to be a large excluded volume. As a result, it is easier to further enhance the dispersibility of the filler.

### <Polyorganosiloxanes Including Other Structures>

The polyorganosiloxane according to one embodiment of the present invention may include a structure having A-B also on the side chain as represented by the above formula (4), while having A-B at one end as represented by the above formula (2). In addition, the polyorganosiloxane according to one embodiment of the present invention may include a structure having A-B also on the side chain as represented by the above formula (4), while having A-B at both ends as represented by the above formula (3). However, from the viewpoint of further enhancing the dispersibility of the filler, it is most preferable for the above polyorganosiloxane to include a structure having A-B at only one end as represented by the above formula (2).

### <Method for Producing Polyorganosiloxane>

A method for producing the polyorganosiloxane of the present invention is not particularly limited, and the polyorganosiloxane of the present invention can be obtained by reacting a generally available polyorganosiloxane having a functional group with a compound including conjugated 3 or more and 6 or less aromatic 6-membered rings and a functional group capable of reacting with the functional group included in the above polyorganosiloxane. To give an example, the polyorganosiloxane of the present invention can be produced by utilizing an acetalization reaction between an aldehyde and a diol, a hydrosilylation reaction between a hydrosilyl group and a carbon-carbon unsaturated bond, or the like.

For example, the polyorganosiloxane of the present invention can be produced by a reaction of a polyorganosiloxane including a diol structure with a compound having an aldehyde group and including conjugated 3 or more and 6 or less aromatic 6-membered rings. Alternatively, the polyorganosiloxane of the present invention can be produced by a reaction of a polyorganosiloxane having a hydrosilyl group at the end and/or side chain, with a compound including a group having a carbon-carbon unsaturated bond such as an acryloyl group or a methacryloyl group and conjugated 3 or more and 6 or less aromatic 6-membered rings.

### <Filler>

The polyorganosiloxane of the present invention represented by the formula (1) as described above is suitably used as a dispersant of a filler.

Examples of the type of filler include a metal oxide, a metal nitride, a carbide, a carbon-based material, and a metal hydroxide and among them, since the polyorganosiloxane of the present invention is highly effective in enhancing the dispersibility for the filler with a π-conjugated system, as a filler, preferably the filler with a π-conjugated system, particularly preferably graphite.

An average particle diameter of the filler is not particularly limited, but preferably 0.1 µm or more and 250 µm or less, more preferably 0.2 µm or more and 100 µm or less.

Herein, the average particle diameter can be measured using, e.g., the "Laser Diffraction Particle Size Distribution Analyzer" produced by HORIBA, ltd., and the particle diameter (d50) when the cumulative volume is 50% can be used as the average particle diameter.

The filler can be well dispersed in a solvent by using the polyorganosiloxane of the present invention. A type of solvent is not particularly limited if it is one in which the polyorganosiloxane described in the present invention is dissolved, but is preferably, e.g., toluene, cyclohexanone, methyl ethyl ketone, isopropyl alcohol, ethyl acetate, etc. An amount of the polyorganosiloxane represented by the formula (1) blended is preferably 10 parts by mass or more, more preferably 100 parts by mass or more, even more preferably 500 parts by mass or more, and preferably 10,000 parts by mass or less, more preferably 5,000 parts by mass or less, even more preferably 2,000 parts by mass or less, with respect to 100 parts by mass of the filler.

### Examples

Hereinafter, the present invention will be clarified by giving specific Examples and Comparative Examples of the present invention. However, the present invention is not limited to the following Examples.

### [Performance of Dispersant: Evaluation of Dispersibility]

0.1 g of graphite (10 µm of an average particle diameter), 1 g of a polyorganosiloxane (dispersant) from each Example and Comparative Example, and 10 g of toluene were subjected to ultrasonic treatment for 1 hour, to disperse the graphite in the toluene. The sample was then allowed to stand for 1 hour and the dispersion state of graphite was visually evaluated on a scale of 4 levels, AA to C.
AA: fully dispersed
A: half dispersed
B: partially dispersed
C: not dispersed, but settled down

### [Viscosity of Polyorganosiloxane (Dispersant): Evaluation of Fluidity]

Viscosity was measured using E-type viscometer "TV-25" produced by Toki Sangyo Co., Ltd. under the conditions of 25°C, 50 rpm, and using a cone rotor "1°34'×R24", and the fluidity was evaluated according to the following criteria.
AA: 200 mPa·s or less
A: more than 200 mPa·s and 300 mPa·s or less
B: more than 300 mPa·s and 400 mPa·s or less
C: more than 400 mPa·s.

### <Example 1>

98.6 g of an organosiloxane compound (n=210) having a 1,3-diol group represented by the formula (15), 1.4 g of 1-pyrenecarboxaldehyde as a monomer, 50 g of toluene as a solvent, and further 0.6 g of a catalyst ("Amberlyst 15 dry" produced by ORGANO CORPORATION) were reacted at 100°C for 24 hours in a nitrogen atmosphere. After the reaction, the catalyst was removed by filtration through a 5.0 µm PTFE filter, and the filtrate was concentrated using a rotary evaporator and a vacuum dryer, to obtain the polyorganosiloxane of Example 1. The reaction formula is as follows. Herein, the progress of the following reaction was confirmed by ¹H NMR measurement. The NMR measurement apparatus used was "ECX-400" produced by JEOL Ltd., and the measurement was performed using heavy chloroform as a solvent, under the conditions of a sample concentration of 1% by weight, 25°C, a measurement frequency of 400 MHz, and an accumulation number of 8. In other Examples and Comparative Examples, the progress of the reaction was confirmed by ¹H NMR measurement in the same manner.

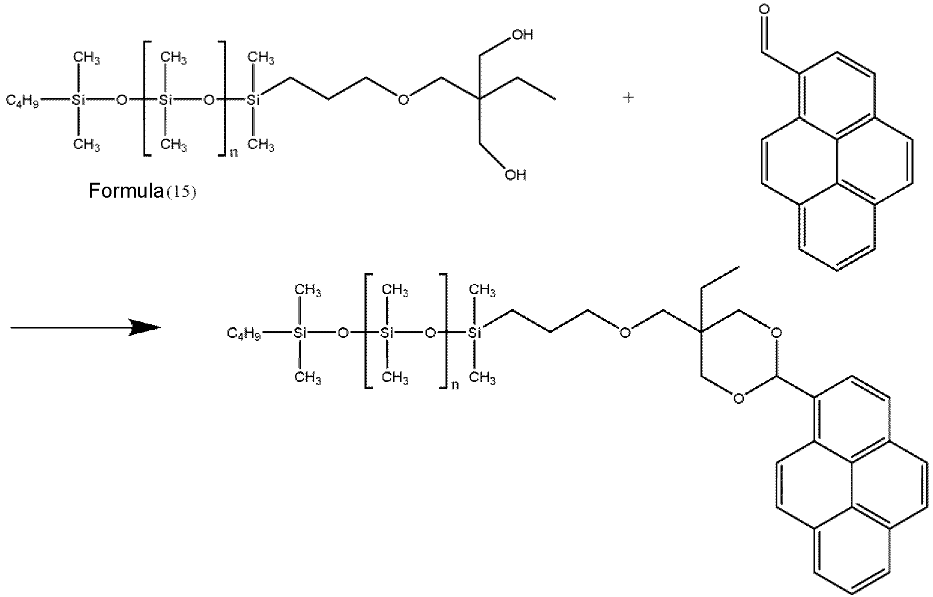

### <Example 2>

The synthesis was performed in the same manner as in Example 1 except that the monomer was changed to 1.7 g of 3-perylene carboxaldehyde, to obtain the polyorganosiloxane of Example 2. The reaction formula is as follows.

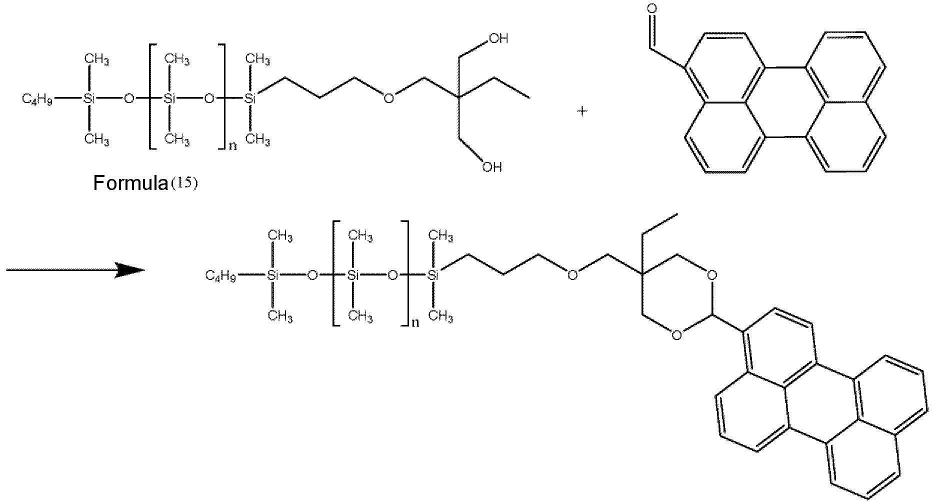

### <Example 3>

The synthesis was performed in the same manner as in Example 1 except that the organosiloxane compound of the formula (15) was changed to a compound of n=70, and the amount of 1-pyrenecarboxaldehyde was changed to 4.2 g, to obtain the polyorganosiloxane of Example 3. The reaction formula is omitted, as it was the same as in Example 1 except that the compound of the formula (15) was changed to the compound of n=70.

### <Example 4>

98.6 g of an organosiloxane compound (n=70) having a hydrosilyl group represented by the formula (16), 5.5 g of (1-pyrene)methyl methacrylate as a monomer, 50 g of toluene as a solvent, and further 0.01 g of Karstedt catalyst (platinum-based catalyst) as a catalyst were reacted at 100°C for 24 hours in a nitrogen atmosphere. The reaction solution was then concentrated using a rotary evaporator and a vacuum dryer, to obtain the polyorganosiloxane of Example 4. The reaction formula is as follows.

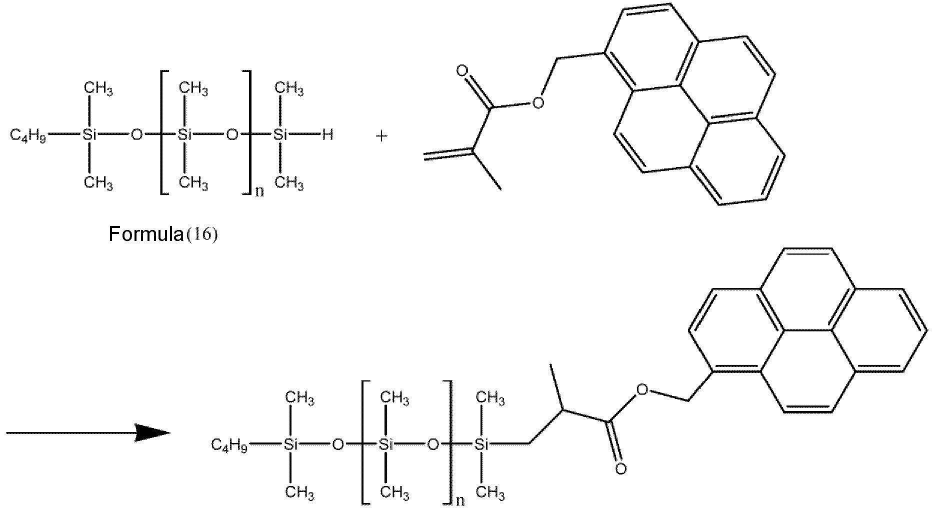

### <Example 5>

The polyorganosiloxane of Example 5 was obtained in the same manner as in Example 4, except that the monomer was changed to 5.7 g of 2-(1-pyrene)ethyl methacrylate. The reaction formula is as follows.

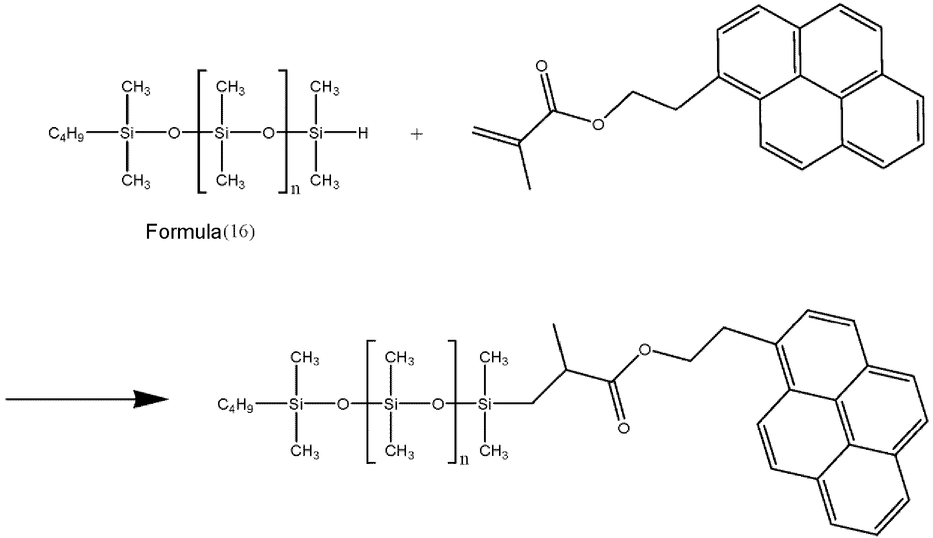

### <Example 6>

The polyorganosiloxane of Example 6 was obtained in the same manner as in Example 4, except that the monomer was changed to 5.3 g of 1-pyrene methacrylate. The reaction formula is as follows.

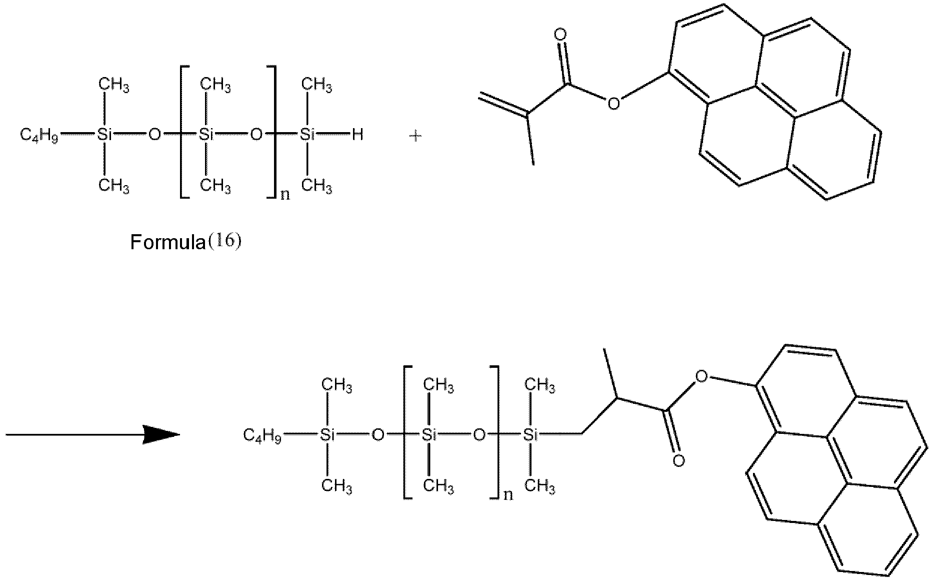

### <Example 7>

98.6 g of an organosiloxane compound (n=70) having a hydrosilyl group represented by the formula (17), 11 g of (1-pyrene)methyl methacrylate as a monomer, 50 g of toluene as a solvent, and further 0.01 g of Karstedt catalyst (platinum-based catalyst) as a catalyst were reacted at 100°C for 24 hours in a nitrogen atmosphere. The reaction solution was concentrated using a rotary evaporator and a vacuum dryer, to obtain the polyorganosiloxane of Example 7. The reaction formula is as follows.

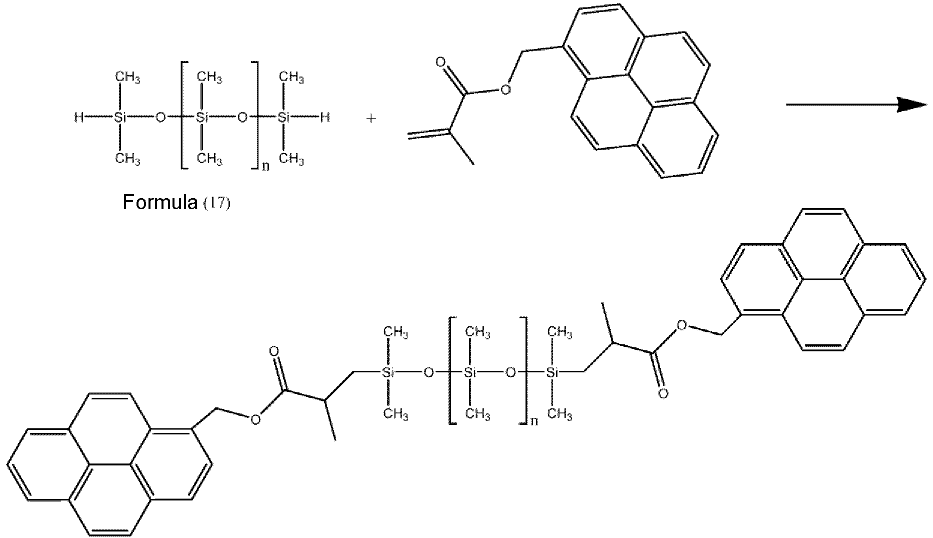

### <Example 8>

98.6 g of an organosiloxane compound (n=70) having a hydrosilyl group represented by the formula (18), 5.5 g of (1-pyrene)methyl methacrylate as a monomer, 50 g of toluene as a solvent, and further 0.01 g of Karstedt catalyst (platinum-based catalyst) as a catalyst were reacted at 100°C for 24 hours in a nitrogen atmosphere. The reaction solution was concentrated using a rotary evaporator and a vacuum dryer, to obtain the polyorganosiloxane of Example 8. The reaction formula is as follows.

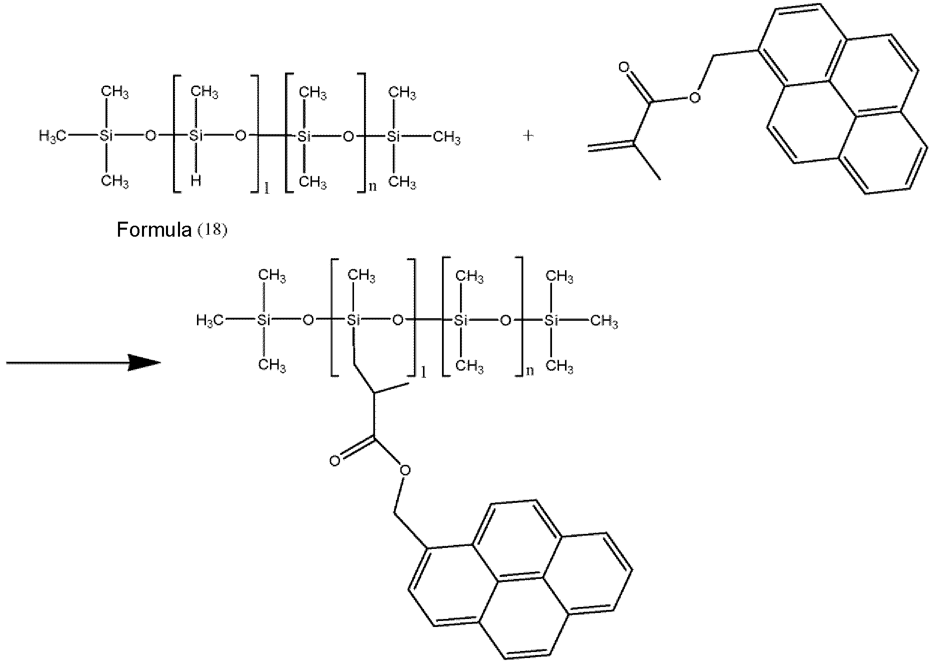

### <Example 9>

98.6 g of an organosiloxane compound (n=70) having a hydrosilyl group represented by the formula (19), 22 g of (1-pyrene)methyl methacrylate as a monomer, 50 g of toluene as a solvent, and further 0.01 g of Karstedt catalyst (platinum-based catalyst) as a catalyst were reacted at 100°C for 24 hours in a nitrogen atmosphere. The reaction solution was concentrated using a rotary evaporator and a vacuum dryer, to obtain the polyorganosiloxane of Example 9. The reaction formula is as follows.

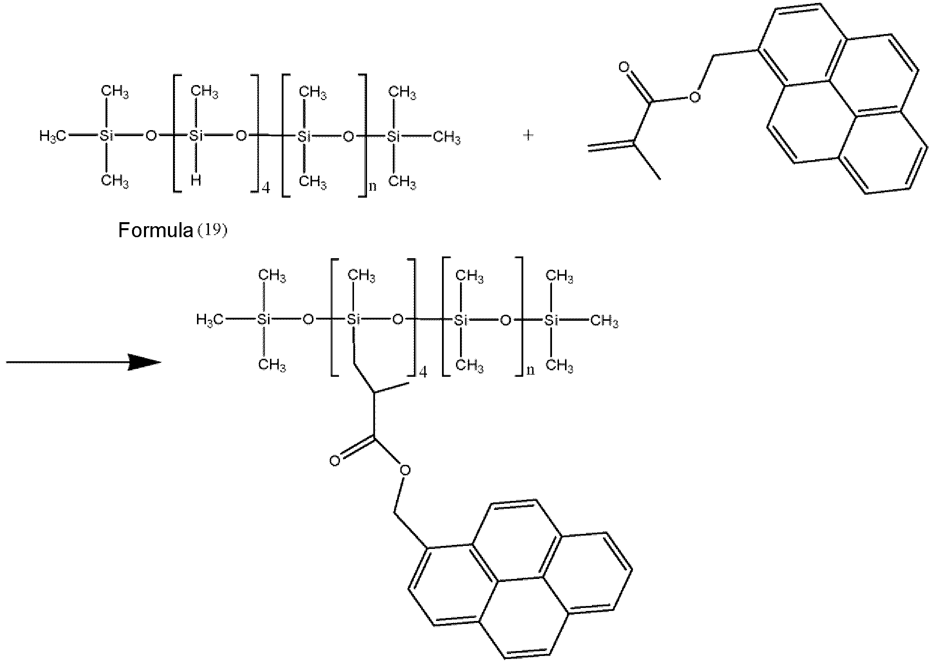

### <Example 10>

The polyorganosiloxane of Example 10 was obtained in the same manner as in Example 1, except that the monomer was changed to 1.2 g of 9-anthracenecarboxaldehyde. The reaction formula is as follows.

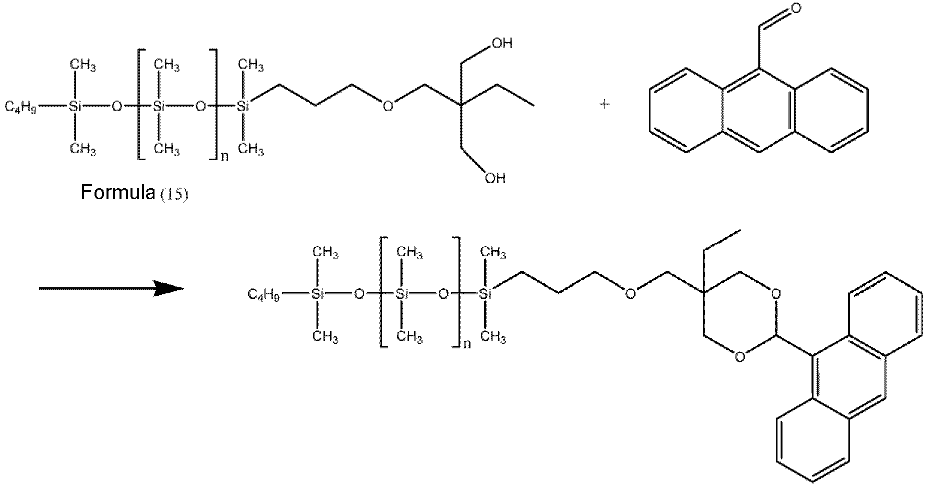

### <Example 11>

The polyorganosiloxane of Example 11 was obtained in the same manner as in Example 1, except that the monomer was changed to 1.5 g of [1,1':4',1"]terphenylcarboxaldehyde. The reaction formula is as follows.

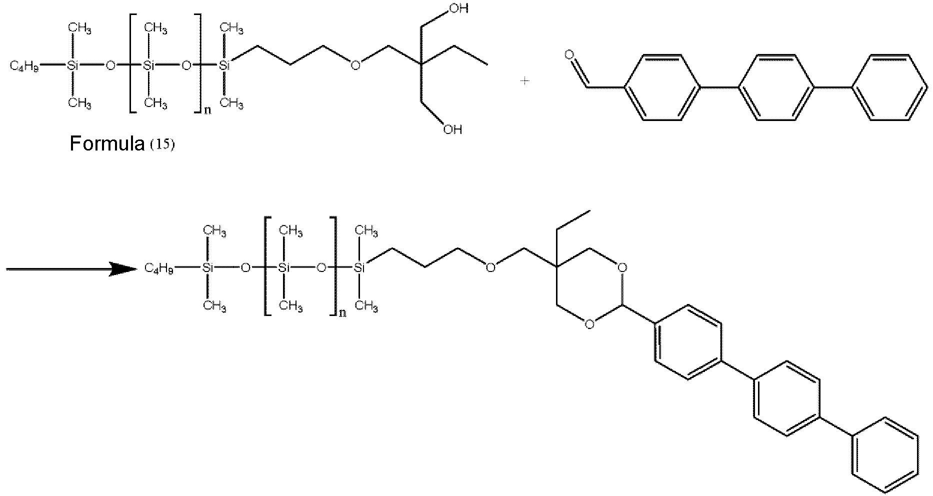

### <Example 12>

The polyorganosiloxane of Example 12 was obtained in the same manner as in Example 1, except that the monomer was changed to 1.4 g of 1-pyrene acetaldehyde. The reaction formula is as follows.

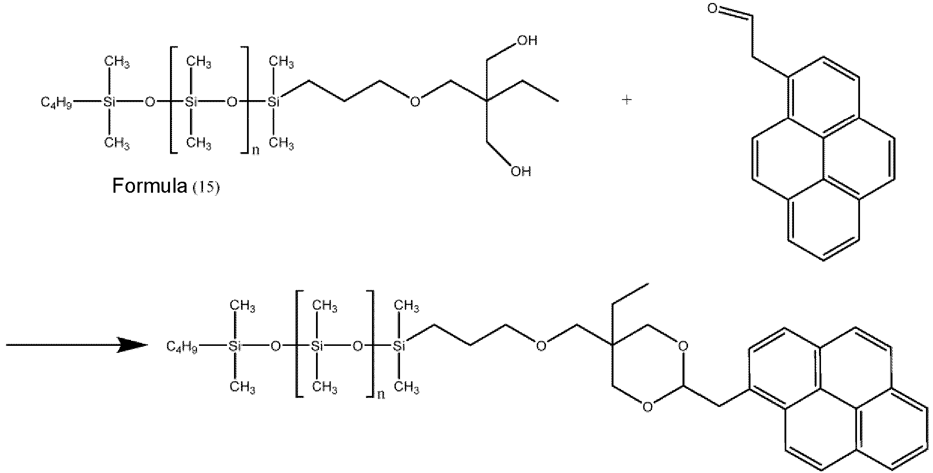

### <Example 13>

The polyorganosiloxane of Example 13 was obtained in the same manner as in Example 3, except that the monomer was changed to 5.1 g of 3-perylene carboxaldehyde. The reaction formula is as follows.

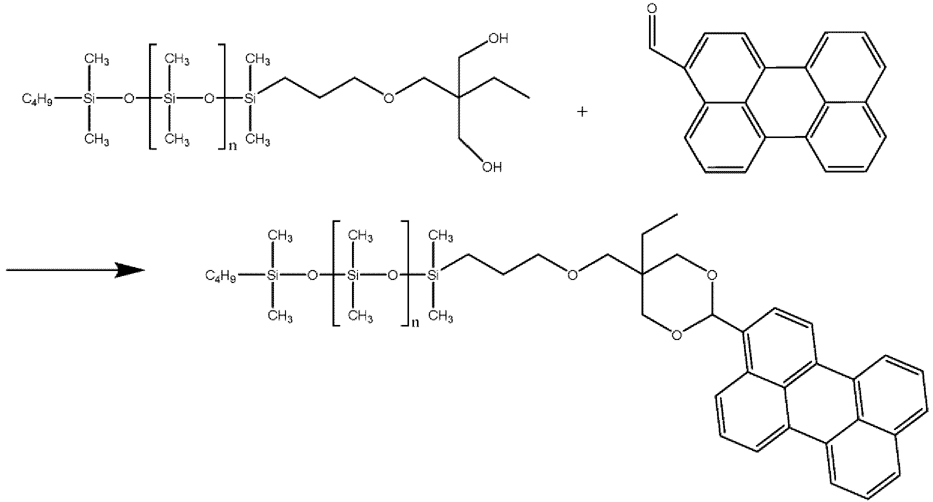

### <Comparative Example 1>

The polyorganosiloxane of Comparative Example 1 was obtained in the same manner as in Example 1, except that the monomer was changed to 0.97 g of 2-naphthaldehyde. The reaction formula is as follows.

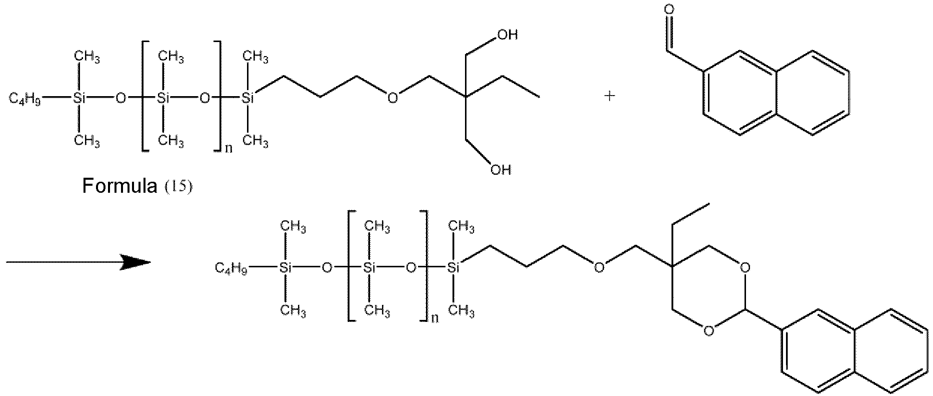

### <Comparative Example 2>

The polyorganosiloxane of Comparative Example 2 was obtained in the same manner as in Example 1, except that the monomer was changed to 2.0 g of 1-coronene carboxaldehyde. The reaction formula is as follows.

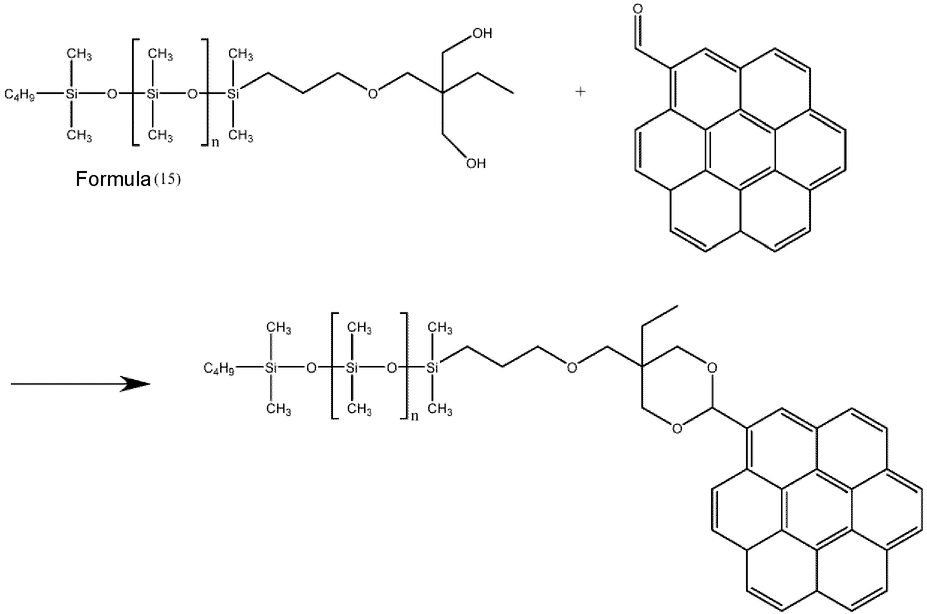

### <Comparative Example 3>

The polyorganosiloxane of Comparative Example 3 was obtained in the same manner as in Example 4, except that the monomer was changed to 5.9 g of 3-(1-pyrene)propyl methacrylate. The reaction formula is as follows.

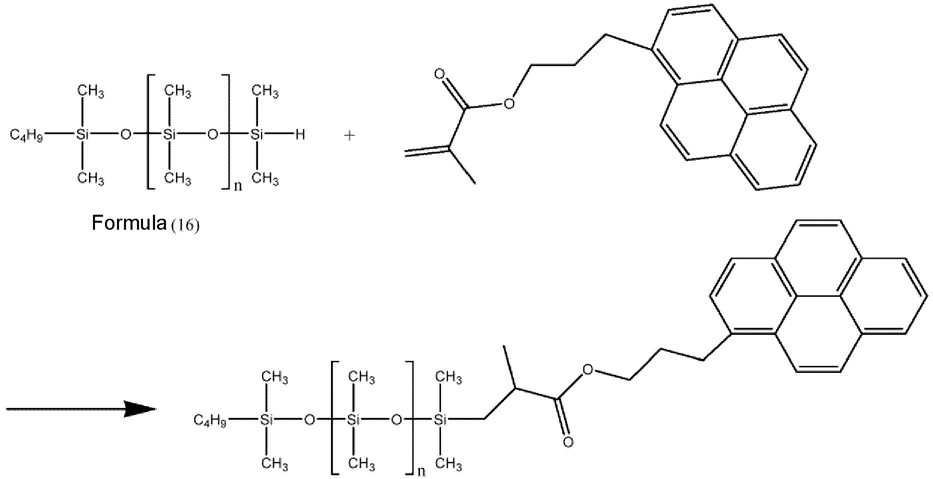

### <Comparative Example 4>

9.7 g of an organosiloxane compound (n=140) having a monool group represented by the formula (20), 0.3 g of 1-pyrenebutanoic acid as a monomer, 30 g of tetrahydrofuran as a solvent, and 0.3 g of N,N'-dicyclohexylcarbodiimide and 0.1 g of N,N-dimethyl-4-aminopyridine as condensing agents were used. These were reacted at 0°C for 24 hours in a nitrogen atmosphere, and the reaction solution was concentrated using a rotary evaporator. After concentration, the precipitate was removed by centrifugation to obtain the polyorganosiloxane of Comparative Example 4 as the supernatant. The reaction formula is as follows.

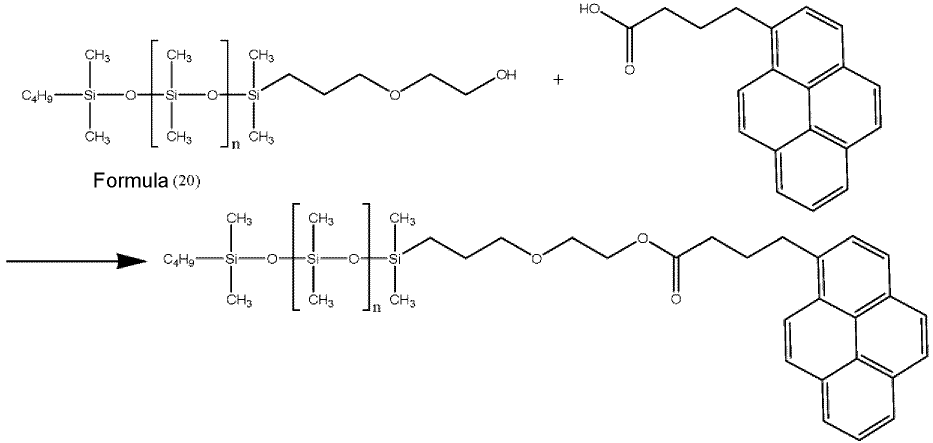

### <Comparative Example 5>

The polyorganosiloxane of Comparative Example 5 was obtained in the same manner as in Example 4, except that the monomer was changed to 3.8 g of 1-vinylpyrene. The reaction formula is as follows.

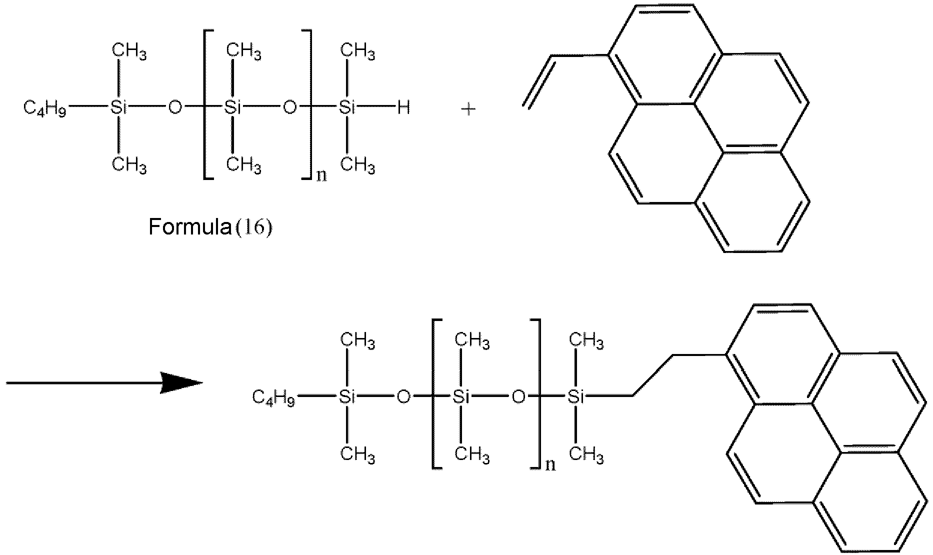

### <Comparative Example 6>

The polyorganosiloxane of Comparative Example 6 was obtained in the same manner as in Example 8, except that the monomer was changed to 3.8 g of 1-vinylpyrene. The reaction formula is as follows.

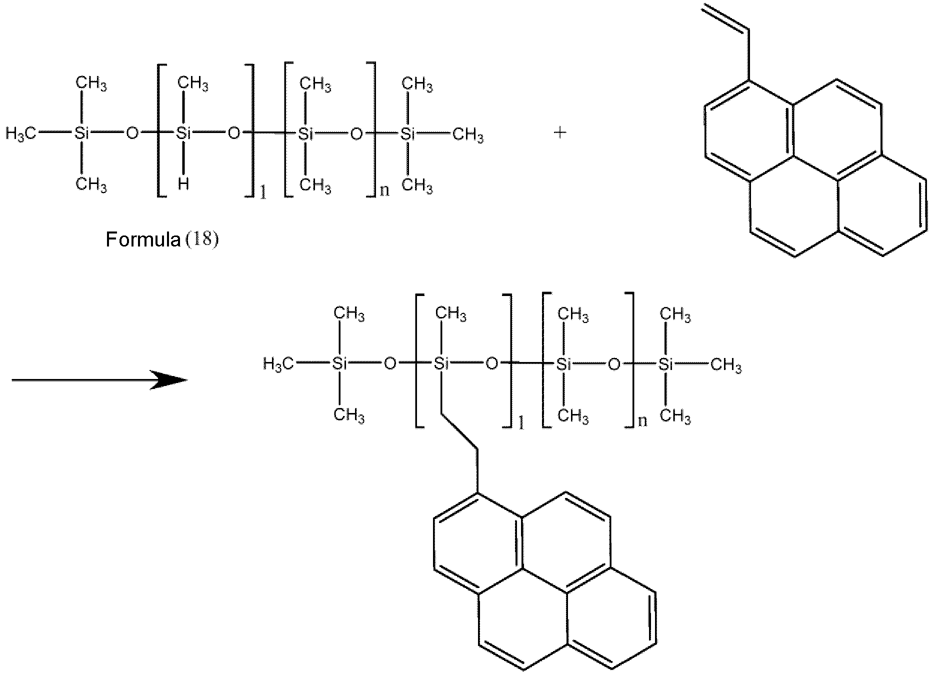

### <Comparative Example 7>

The polyorganosiloxane of Comparative Example 7 was obtained in the same manner as in Example 9, except that the monomer was changed to 15.3 g of 1-vinylpyrene. The reaction formula is as follows.

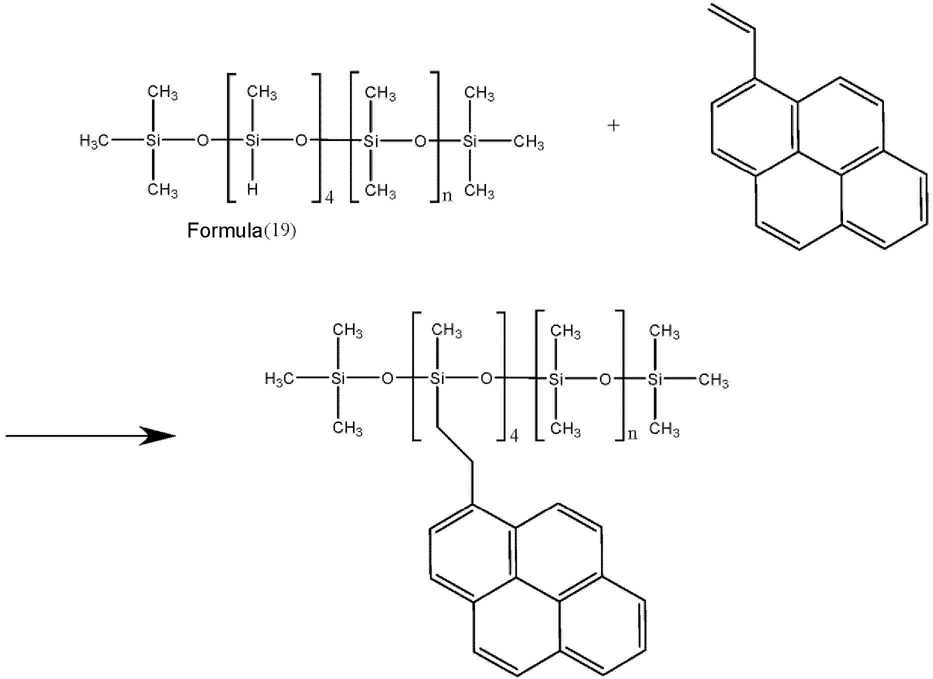

### <Comparative Example 8>

The polyorganosiloxane of Comparative Example 8 was obtained in the same manner as in Comparative Example 4, except that the organosiloxane compound (n=140) represented by the following formula (21) was used instead of the organosiloxane compound represented by the formula (20) used in Comparative Example 4. The reaction formula is as follows.

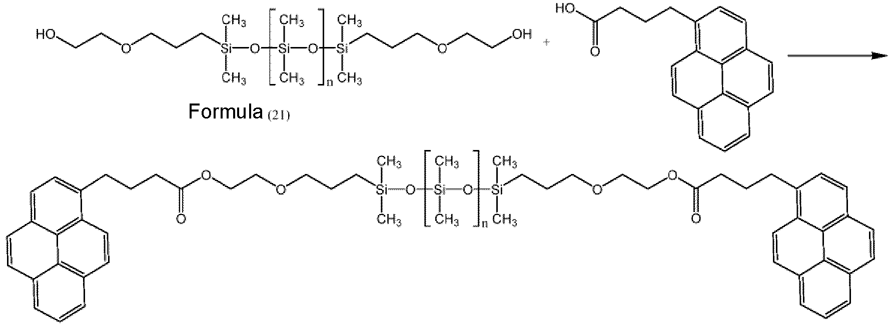

**Table 1**

| | B: Number of conjugated rings | Heteroatom position | n | A-B introduction position | m | B structure | B structure | A: number of carbon atoms | Evaluation of dispersibility | | Evaluation of fluidity, Viscosity (mPa·s) | |
|---|---|---|---|---|---|---|---|---|---|---|---|---|
| Example 1 | 4 | β | 210 | One end | - | Condensed ring | pyrene | 10 | Half dispersed | A | 290 | A |
| Example 2 | 5 | β | 210 | One end | - | Condensed ring | perylene | 10 | Fully dispersed | AA | 390 | B |
| Example 3 | 4 | β | 70 | One end | - | Condensed ring | pyrene | 10 | Half dispersed | A | 190 | AA |
| Example 4 | 4 | β | 70 | One end | - | Condensed ring | pyrene | 5 | Half dispersed | A | 180 | AA |
| Example 5 | 4 | γ | 70 | One end | - | Condensed ring | pyrene | 6 | Half dispersed | A | 210 | A |
| Example 6 | 4 | α | 70 | One end | - | Condensed ring | pyrene | 4 | Half dispersed | A | 170 | AA |
| Example 7 | 4 | β | 70 | Both ends | - | Condensed ring | pyrene | 5 | Half dispersed | A | 220 | A |
| Example 8 | 4 | β | 70 | Side chain | 1 | Condensed ring | pyrene | 5 | Half dispersed | A | 240 | A |
| Example 9 | 4 | β | 70 | Side chain | 4 | Condensed ring | pyrene | 5 | Half dispersed | A | 380 | B |
| Example 10 | 3 | β | 210 | One end | - | Condensed ring | anthracene | 10 | Partially dispersed | B | 250 | A |
| Example 11 | 3 | β | 210 | One end | - | Non-condensed ring | terphenyl | 10 | Partially dispersed | B | 310 | B |
| Example 12 | 4 | γ | 210 | One end | - | Condensed ring | pyrene | 11 | Partially dispersed | B | 300 | B |
| Example 13 | 5 | β | 70 | One end | - | Condensed ring | perylene | 10 | Fully dispersed | AA | 400 | B |
| Comparative Example 1 | 2 | β | 210 | One end | - | Condensed ring | naphthalene | 10 | Settled down | C | 170 | AA |
| Comparative Example 2 | 7 | β | 210 | One end | - | Condensed ring | coronene | 10 | Fully dispersed | AA | 600 | C |
| Comparative Example 3 | 4 | Δ | 70 | One end | - | Condensed ring | pyrene | 7 | Half dispersed | A | 420 | C |
| Comparative Example 4 | 4 | ε | 140 | One end | - | Condensed ring | pyrene | 9 | Half dispersed | A | 450 | C |
| Comparative Example 5 | 4 | - | 70 | One end | - | Condensed ring | pyrene | 2 | Half dispersed | A | 410 | C |
| Comparative Example 6 | 4 | - | 70 | Side chain | 1 | Condensed ring | pyrene | 2 | Half dispersed | A | 430 | C |
| Comparative Example 7 | 4 | - | 70 | Side chain | 4 | Condensed ring | pyrene | 2 | Half dispersed | A | 500 | C |
| Comparative Example 8 | 4 | ε | 140 | Both ends | - | Condensed ring | pyrene | 9 | Half dispersed | A | 450 | C |

The polyorganosiloxane shown in each Example, which included conjugated 3 or more and 6 or less aromatic 6-membered rings and in which any one of the α-position atom bonded to the aromatic 6-membered ring, the β-position atom, and the γ-position atom was a heteroatom, was good in both the dispersibility and fluidity evaluations. In contrast, the polyorganosiloxane of each Comparative Example, which did not include the conjugated 3 or more and 6 or less aromatic 6-membered rings, or the heteroatom in all the α-position atom, the β-position atom, and the γ-position atom of the aromatic 6-membered rings, was poor in one of the dispersibility and fluidity evaluations as a result.

## Claims

1. A polyorganosiloxane comprising a structure represented by the following formula (1): 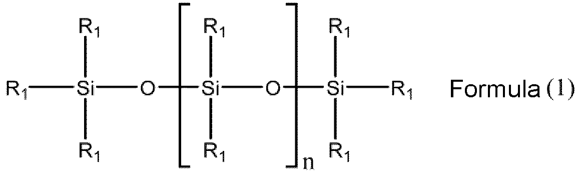 wherein
R₁ are each independently a group represented by A-B or a monovalent hydrocarbon group having 1 to 4 carbon atoms;
at least one R₁ among a plurality of R₁ is a group represented by A-B, wherein the A is a divalent organic group bonded to a silicon atom, and the B comprises conjugated 3 or more and 6 or less aromatic 6-membered rings;
when, among atoms constituting the A, an atom bonded to the aromatic 6-membered ring included in the B is an α-position atom, an atom bonded to the α-position atom is a β-position atom, and an atom bonded to the β-position atom and other than the α-position atom is a γ-position atom, and any one of the α-position atom, the β-position atom, and the γ-position atom is a heteroatom; and
n is an integer of 1 or more.

2. The polyorganosiloxane according to claim 1, wherein the polyorganosiloxane comprises a structure represented by the following formula (2): 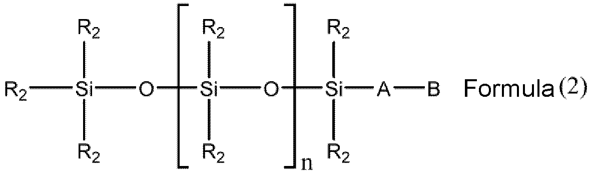 wherein R₂ are monovalent hydrocarbon groups having 1 to 4 carbon atoms, and A, B and n are the same as defined in the formula (1).

3. The polyorganosiloxane according to claim 1, wherein the polyorganosiloxane comprises a structure represented by the following formula (3): 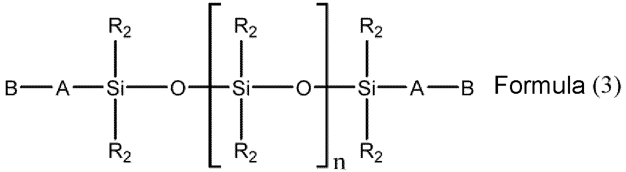 wherein R₂ are monovalent hydrocarbon groups having 1 to 4 carbon atoms, and A, B and n are the same as defined in the formula (1).

4. The polyorganosiloxane according to claim 1, wherein the polyorganosiloxane comprises a structure represented by the following formula (4): 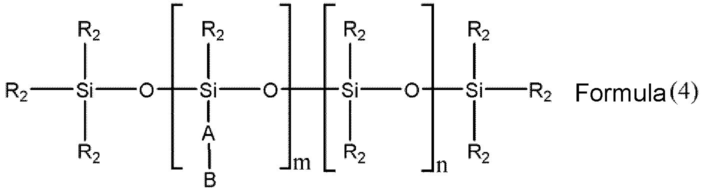 wherein R₂ are monovalent hydrocarbon groups having 1 to 4 carbon atoms, m is an integer of 1 or more and 10 or less, and A, B and n are the same as defined in the formula (1).

5. The polyorganosiloxane according to claim 4, wherein the m is 1 or 2.

6. The polyorganosiloxane according to any one of claims 1 to 5, wherein the B is a condensed ring compound.

7. The polyorganosiloxane according to claim 6, wherein the B comprises a pyrene substitution product or a perylene substitution product.

8. The polyorganosiloxane according to claim 7, wherein the A has 10 or less carbon atoms.
